# EUROPÄISCHE PATENTSCHRIFT

(11) **EP 1 781 393 B1**
(45) Veröffentlichungstag und Bekanntmachung des Hinweises auf die Patenterteilung: **08.03.2017**
(21) Anmeldenummer: 05770036.1
(22) Anmeldetag: 04.08.2005
(51) Int. Cl.: B01D 19/04, C11D 3/00

(54) **ENTSCHÄUMERZUSAMMENSETZUNGEN**
ANTI-FOAMING COMPOSITIONS
COMPOSITIONS ANTIMOUSSE

(30) Priorität: 19.08.2004 DE 102004040263
(43) Veröffentlichungstag der Anmeldung: 09.05.2007
(73) Patentinhaber: Wacker Chemie AG, 81737 München (DE)
(72) Erfinder: RAUTSCHEK, Holger, 01612 Nünchritz (DE); BECKER, Richard, 84489 Burghausen (DE); BURGER, Willibald, 84489 Burghausen (DE)
(74) Vertreter: Budczinski, Angelika
(86) Internationale Anmeldenummer: PCT/EP2005/008462
(87) Internationale Veröffentlichungsnummer: WO 2006/018145

(56) Entgegenhaltungen:
- EP-A- 0 663 225
- EP-A- 1 075 863
- EP-A2- 0 578 424
- WO-A-2004/018074
- DE-A1- 19 922 915
- US-A- 4 741 861
- US-A- 5 681 808
- Noll, Walter: "Chemie und Technologie der Silicone", 1968, Verlag Chemie, Weinheim * page 395 *

## Beschreibung

Die Erfindung betrifft Zusammensetzungen, die organische Verbindungen mit direkt an das Silizumatom gebundenen aromatischen Resten enthalten und deren Verwendung als Entschäumer.

In vielen flüssigen, insbesondere wässrigen Systemen, die als erwünschte oder auch unerwünschte Bestandteile oberflächenaktive Verbindungen enthalten, können durch Schaumbildung Probleme auftreten, wenn diese Systeme in mehr oder weniger intensiven Kontakt mit gasförmigen Stoffen gebracht werden, beispielsweise beim Begasen von Abwässern, beim intensiven Rühren von Flüssigkeiten, bei Destillations-, Wasch- oder Färbeprozessen oder bei Abfüllvorgängen.

Die Bekämpfung dieses Schaumes kann auf mechanischem Wege oder durch den Zusatz von Entschäumern erfolgen. Dabei haben sich Entschäumer auf Siloxanbasis besonders bewährt.

Entschäumer auf Basis von Siloxanen werden beispielsweise nach DE-AS 15 19 987 durch Erhitzen von hydrophiler Kieselsäure in Polydimethylsiloxanen hergestellt. Durch Anwendung von basischen Katalysatoren kann die Wirksamkeit derartiger Entschäumer verbessert werden, wie etwa in DE-OS 17 69 940 offenbart. Eine Alternative ist die Verteilung von hydrophobierter Kieselsäure in einem Polydimethylsiloxan, z.B. entsprechend DE-OS 29 25 722. Jedoch ist die Wirksamkeit der erhaltenen Entschäumer noch verbesserungswürdig. So beschreibt US-A 4,145,308 beispielsweise eine Entschäumerzubereitung, die neben einem Polydiorganosiloxan und Kieselsäure noch ein Copolymeres aus (CH₃)₃SiO_{1/2}- und SiO₂-Bausteinen enthält. Copolymere aus (CH₃)₃SiO_{1/2}- und SiO₂-Bausteinen sollen auch in Kombination mit Siloxanen, die endständige Langalkylgruppen tragen, vorteilhaft sein, wie etwa in EP-A 301 531 beschrieben. Die Verwendung von anvernetzten, zum Teil bereits gummiähnlichen Polydimethylsiloxanen soll zur Steigerung der Entschäumerwirkung beitragen. Hierzu sei beispielsweise auf US-A 2,632,736, EP-A 273 448 und EP-A 434 060 verwiesen. Allerdings sind diese Produkte im Allgemeinen sehr hochviskos und schlecht handhabbar oder weiter verarbeitbar.

Meistens werden bevorzugt Polysiloxane mit Methylgruppen, wie Polydimethylsiloxane, eingesetzt. Obwohl Polymere mit einer Reihe anderer aliphatischer oder aromatischer Kohlenwasserstoffgruppen am Silizium bekannt sind und in vielen Patenten auch in zur Herstellung von Entschäumern vorgeschlagen werden, gibt es nur wenig Hinweise darauf, dass man durch die Auswahl dieser Substituenten am Silizium eine wesentliche Verbesserung der Entschäumungswirkung erreichen kann. Häufig will man durch die Einbringung von langen Alkylkylgruppen oder Polyethersubstituenten die Verträglichkeit mit Mineralölen, welche in Entschäumerzusammensetzungen enthalten sein können, verbessern oder Siliconstörungen z.B. in Lacken vermeiden. So wird in EP-A 121 210 die Verwendung von Polysiloxanen, die Alkylgruppen mit 6-30 Kohlenstoffatomen tragen, empfohlen, so dass der Anteil an Kohlenstoff, der als CH₂-Gruppe vorliegt, 30-70% beträgt, in Kombination mit Mineralöl. In den Beispielen werden vor allem Polysiloxane mit Octadecylgruppen erwähnt. In JP-A 60173068 werden Siloxane mit Oktyl- und Polyethergruppen als Entschäumer in wässrigen Druckfarben empfohlen. Siloxane mit Alkylgruppen mit mehr als 30 Kohlenstoffatomen in Kombination mit Aminosiloxanen sollen nach US-A 4,584,125 insbesondere dann vorteilhaft für die Antischaumwirkung sein, wenn der Anteil an Siloxaneinheiten, die diese Gruppierungen tragen, um 5% liegt.

US-A-4741861 und EP-A-578424 beschreiben auch Entschäumer auf Basis von Siloxanen.

Die nach dem Stand der Technik hergestellten Entschäumerformulierungen weisen jedoch in stark schäumenden tensidreichen Systemen nicht immer eine ausreichend lang anhaltende Wirksamkeit auf oder sind wegen der hohen Viskosität aufgrund des erreichten Verzweigungs- oder Vernetzungsgrades schwer handhabbar.

Gegenstand der Erfindung sind Zusammensetzungen gemäss Anspruch 1.

Für die vorliegende Erfindung ist es wesentlich, dass die Komponente (A) aromatische Reste enthält, die direkt an das Siliziumatom gebunden sind. Das heißt, dass es eine kovalente Bindung zwischen einem Siliziumatom in der Einheit der Formel (I) und einem Kohlenstoffatom, welches zum aromatischen Ring gehört, gibt.

Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest; Alkenylreste, wie der Vinyl- und der Allylrest; Cycloalkylreste, wie Cyclopentyl-, Cyclohexyl-, Cycloheptylreste und Methylcyclohexylreste, über aliphatische Gruppen an das Siliziumatom gebundene aromatische Gruppen, wie der Benzylrest, Phenylethylrest oder der 2-Phenylpropylrest.

Beispiele für substituierte Reste R sind 3,3,3-Trifluor-n-propylrest, Cyanoethyl-, Glycidoxy-n-propyl-, Polyalkylenglycol-n-propyl-, Amino-n-propyl-, Aminoethylamino-n-propyl- und Methacryloxy-n-propylreste.

Bevorzugt handelt es sich bei Rest R um Wasserstoffatom oder gegebenenfalls substituierte, aliphatische Kohlenwasserstoffreste mit 1 bis 30 Kohlenstoffatomen, besonders bevorzugt um aliphatische Kohlenwasserstoffreste mit 1 bis 4 Kohlenstoffatomen, insbesondere um den Methylrest.

Beispiele für Rest R¹ sind Wasserstoffatom und die für Rest R und R² angegebenen Reste.

Bevorzugt handelt es sich bei Rest R¹ um Wasserstoffatom oder gegebenenfalls substituierte Kohlenwasserstoffreste mit 1 bis 30 Kohlenstoffatomen, besonders bevorzugt um Wasserstoffatom oder Kohlenwasserstoffreste mit 1 bis 4 Kohlenstoffatomen, insbesondere um Methyl- oder Ethylreste.

Beispiele für R² sind Arylreste, wie Phenyl-, Toloyl-, Xylyl-, Cumyl-, Naphtyl-, Anthracylreste.

Bevorzugt handelt es sich bei Rest R² um den Phenylrest.

Es handelt sich bei 15 bis 100 %, besonders bevorzugt 15 bis 50 %, der SiC-gebundenen Reste in der Komponente (A) um Reste R².

Bevorzugt ist b gleich 0 oder 1, besonders bevorzugt 0.

Bevorzugt ist c gleich 0, 1 oder 2.

Vorzugsweise haben weniger als 5 %, insbesondere weniger als 1 %, der Reste R, die Bedeutung von Wasserstoffatom.

Die als Komponente (A) eingesetzten Organosiliziumverbindungen enthaltend Einheiten der Formel (I) sind bevorzugt verzweigte oder lineare Organopolysiloxane, die besonders bevorzugt aus Einheiten der Formel (I) bestehen.

Im Rahmen der vorliegenden Erfindung sollen von dem Begriff Organopolysiloxane sowohl polymere, oligomere wie auch dimere Siloxane mitumfasst werden.

Beispiele für die erfindungsgemäße Komponente (A) sind solche aus Einheiten Ph₃SiO_{1/2}-, Ph₂MeSiO_{1/2}-, PhMe₂SiO_{1/2}-, Ph₂SiO_{2/2}-, PhMeSiO_{2/2}- und PhSiO_{3/2}-, wobei Me gleich Methylrest und Ph gleich Phenylrest bedeutet, wie z.B.

lineare Polysiloxane der Formeln

Me₃SiO(Ph₂SiO)ₓ(Me₂SiO)_{z}SiMe₃,

Me₃SiO(PhMeSiO)_{y}(Me₂SiO)_{z}SiMe₃,

Me₃SiO(Ph₂SiO)ₓ(PhMeSiO)_{y}(Me₂SiO)_{z}SiMe₃

und

Me₃SiO(Ph₂SiO)ₓ(Me₂SiO)_{z}SiMe₃

sowie verzweigte Polysiloxane der Formeln

MeSi[O(Ph₂SiO)ₓ(Me₂SiO)_{z}SiMe₃]₃,

PhSi[O(PhMeSiO)_{y}(Me₂SiO)_{z}SiMe₃]₃

und

Me₃SiO(Me₂SiO)_{z}[PhSiO(OMe₂SiO)_{z}SiMe₃]ᵥ(Me₂SiO)_{z}SiMe₃,

wobei die Koeffizienten v, x, y unabhängig voneinander Werte größer gleich 1 annehmen und z 0 oder größer gleich 1 ist. Die Summe aus v, x, y und z bestimmt den Polymerisationsgrad, v die Anzahl von Verzweigungen, und damit die Viskosität.

Die erfindungsgemäßen Organosiliziumverbindungen (A) haben eine Viskosität von bevorzugt 10 bis 1 000 000 mPas, besonders bevorzugt von 100 bis 50 000 mPas, insbesondere von 500 bis 5 000 mPas, jeweils gemessen bei 25°C.

Die erfindungsgemäßen Organosiliziumverbindungen (A) sind handelsübliche Produkte bzw. können nach beliebigen, in der siliziumorganischen Chemie bisher bekannten Methoden hergestellt werden, wie z.B. durch Cohydrolyse der entsprechenden Silane. Die erfindungsgemäßen Zusammensetzungen enthalten Zusatzstoff (B) in Mengen von bevorzugt 0,1 bis 30 Gewichtsteilen, besonders bevorzugt 1 bis 15 Gewichtsteilen, jeweils bezogen auf 100 Gewichtsteile Komponente (A).

Als erfindungsgemäß eingesetzten Zusatzstoffe (B) handelt es sich um eine Mischung aus Komponenten (B1) und (B2), wobei letzteres bevorzugt ist.

Bei der Komponente (B1) handelt es sich bevorzugt um pulverförmige, vorzugsweise pulverförmige hydrophobe, Füllstoffe. Vorzugsweise weist Komponente (B1) eine BET-Oberfläche von 20 bis 1000 m²/g, eine Partikelgröße von weniger als 10 µm und eine Agglomeratgröße von weniger als 100 µm auf.

Beispiele für die Komponente (B1) sind Siliziumdioxid (Kieselsäuren), Titandioxid, Aluminiumoxid, Metallseifen, Quarzmehl, PTFE-Pulver, Fettsäureamide z.B. Ethylenbisstearamid und fein verteilte hydrophobe Polyurethane.

Vorzugsweise werden als Komponente (B1) Siliziumdioxid (Kieselsäuren), Titandioxid oder Aluminiumoxid mit einer BET-Oberfläche von 20 bis 1000 m²/g, einer Partikelgröße von weniger als 10 µm und einer Agglomeratgröße von weniger als 100 µm eingesetzt.

Besonders bevorzugt als Komponente (B1) sind Kieselsäuren, insbesondere solche mit einer BET-Oberfläche von 50 bis 800 m²/g. Diese Kieselsäuren können pyrogene oder gefällte Kieselsäuren +sein. Es sind als Komponente (B1) sowohl vorbehandelte Kieselsäuren einsetzbar, also handelsübliche hydrophobe Kieselsäuren, als auch hydrophile Kieselsäuren.

Beispiele für hydrophobe Kieselsäuren, die erfindungsgemäß eingesetzt werden können, sind HDK^{®} H2000, eine pyrogene mit Hexamethyldisilazane behandelte Kieselsäure mit einer BET-Oberfläche von 140 m²/g (käuflich erhältlich bei der Wacker-Chemie GmbH, Deutschland) und eine gefällte mit Polydimethylsiloxan behandelte Kieselsäure mit einer BET-Oberfläche von 90 m²/g (käuflich erhältlich unter der Bezeichnung "Sipernat® D10" bei der Degussa AG, Deutschland).

Falls als Komponente (B1) hydrophobe Kieselsäuren eingesetzt werden sollen, können hydrophile Kieselsäuren auch in situ hydrophobiert werden, wenn das für die gewünschte Wirksamkeit der Entschäumerformulierung vorteilhaft ist. Verfahren zur Hydrophobierung von Kieselsäuren sind vielfach bekannt. Die in situ Hydrophobierung der hydrophilen Kieselsäure kann dabei z.B. durch mehrstündiges Erhitzen der in der Komponente (A) oder in einer Mischung aus (A) mit (B2) und/oder (C) dispergierten Kieselsäure auf Temperaturen von 100 bis 200°C erfolgen.

Dabei kann die Reaktion durch den Zusatz von Katalysatoren, wie KOH, und von Hydrophobiermitteln, wie kurzkettigen OH-terminierten Polydimethylsiloxanen, Silanen oder Silazanen unterstützt werden. Diese Behandlung ist auch beim Einsatz von handelsüblichen hydrophoben Kieselsäuren möglich und kann zur Wirksamkeitsverbesserung beitragen.

Eine weitere Möglichkeit ist die Verwendung einer Kombination von in situ hydrophobierten Kieselsäuren mit handelsüblichen hydrophoben Kieselsäuren.

Beispiele für Rest R³ sind Wasserstoffatom und die für Rest R und R² angegebenen Reste.

Bevorzugt handelt es sich bei Rest R³ um gegebenenfalls substituierte Kohlenwasserstoffreste mit 1 bis 30 Kohlenstoffatomen, besonders bevorzugt um Kohlenwasserstoffreste mit 1 bis 6 Kohlenstoffatomen, insbesondere um den Methylrest.

Beispiele für Rest R⁴ sind die für den Rest R¹ angegebenen Reste.

Bevorzugt handelt es sich bei Rest R⁴ um Wasserstoffatom oder um Kohlenwasserstoffreste mit 1 bis 4 Kohlenstoffatomen, insbesondere um Wasserstoffatom, Methyl- oder Ethylreste.

Bevorzugt ist der Wert für d gleich 3 oder 0.

Bei der erfindungsgemäß gegebenenfalls eingesetzten Komponente (B2) handelt es sich um Siliconharze aus Einheiten der Formel (II), bei denen in weniger als 5%, der Einheiten im Harz die Summe d+e gleich 2 ist.

Es handelt sich bei Komponente (B2) um Organopolysiloxanharze, die im Wesentlichen aus R³₃SiO_{1/2} (M) - und SiO_{4/2}(Q)-Einheiten bestehen mit R³ gleich der obengenannten Bedeutung; diese Harze werden auch als MQ-Harze bezeichnet. Das molare Verhältnis von M- zu Q-Einheiten liegt vorzugsweise im Bereich von 0,5 bis 2,0, besonders bevorzugt im Bereich von 0,6 bis 1,0. Diese Siliconharze können außerdem bis zu 10 Gew.-% freie Hydroxy- oder Alkoxygruppen enthalten.

Vorzugsweise haben diese Organopolysiloxanharze (B2) bei 25°C eine Viskosität größer 1000 mPas oder sind Feststoffe. Das mit Gelpermeationschromatografie bestimmte gewichtsmittlere Molekulargewicht (bezogen auf einen Polystyrolstandard) dieser Harze beträgt vorzugsweise 200 bis 200 000 g/mol, insbesondere 1000 bis 20 000 g/mol.

Komponente (B2) sind handelsübliche Produkte bzw. können nach in der Siliziumchemie gängigen Verfahren z.B. gemäß EP-A 927 733 hergestellt werden.

Das Gewichtsverhältnis von (B1) zu (B2) in der Mischung ist bevorzugt 0,01 bis 50, besonders bevorzugt aus 0,1 bis 7.

Beispiele für Reste R⁵ sind die für Rest R angegebenen Beispiele.

Bevorzugt handelt es sich bei Rest R⁵ um Wasserstoffatom oder gegebenenfalls substituierte, aliphatische Kohlenwasserstoffreste mit 1 bis 30 Kohlenstoffatomen, besonders bevorzugt um aliphatische Kohlenwasserstoffreste mit 1 bis 4 Kohlenstoffatomen, insbesondere um den Methylrest.

Beispiele für Rest R⁶ sind Wasserstoffatom und die für Rest R und R² angegebenen Reste.

Bevorzugt handelt es sich bei Rest R⁶ um Wasserstoffatom oder gegebenenfalls substituierte Kohlenwasserstoffreste mit 1 bis 30 Kohlenstoffatomen, besonders bevorzugt um Wasserstoffatom oder Kohlenwasserstoffreste mit 1 bis 4 Kohlenstoffatomen, insbesondere um Methyl- oder Ethylreste.

Der Wert von g ist bevorzugt 1, 2 oder 3.

Der Wert von h ist bevorzugt 0 oder 1.

Die gegebenenfalls eingesetzten Organopolysiloxane (C) haben eine Viskosität von bevorzugt 10 bis 1 000 000 mm²/s bei 25°C.

Beispiele für erfindungsgemäß gegebenenfalls eingesetzte Komponente (C) sind die für Komponente (A) angegebenen Beispiele, wobei diese siliziumorganische Verbindung keine direkt an Silizium gebundenen aromatischen Reste R² enthält, wie etwa Polydimethylsiloxane mit Viskositäten von 100 bis 1 000 000 mPa·s bei 25°C. Diese Polydimethylsiloxane können z.B. durch den Einbau von R⁵SiO_{3/2}- oder SiO_{4/2}-Einheiten bis maximal 5% aller Einheiten verzweigt sein. Diese verzweigten oder anvernetzten Siloxane weisen dann viskoelastische Eigenschaften auf.

Bevorzugt handelt es sich bei der gegebenenfalls eingesetzten Komponente (C) um im Wesentlichen lineare Organopolysiloxane enthaltend Einheiten der Formel (III), besonders bevorzugt um Polydimethylsiloxane, die mit Silanolgruppen und/oder mit Alkoxygruppen und/oder mit Trimethylsiloxygruppen terminiert sein können oder um Siloxane mit Polyethergruppen. Derartige polyethermodifizierte Polysiloxane sind bekannt und z.B. in EP-A 1076073 beschrieben.

Insbesondere bevorzugt handelt es sich bei Komponente (C) um Organosiliziumverbindungen enthaltend Bausteine der allgemeinen Formel (III), worin R⁵ einen Methylrest und R⁶ einen linearen und/oder verzweigten Kohlenwasserstoffrest mit mindestens 6 Kohlenstoffatomen bedeuten, h einen durchschnittlichen Wert von 0,005 bis 0,5 annimmt und die Summe (g+h) einen durchschnittlichen Wert von 1,9 bis 2,1 hat. Derartige Produkte sind beispielsweise durch alkalisch katalysierte Kondensation von silanolterminierten Polydimethylsiloxanen einer Viskosität 50 bis 50 000 mPa·s bei 25°C und aliphatischen Alkoholen mit mehr als 6 Kohlenstoffatomen, wie Isotridecylalkohol, n-Octanol, Stearylalkohol, 4-Ethyl-hexadecanol oder Eicosanol, zugänglich.

Falls die erfindungsgemäßen Zusammensetzungen Komponente (C) enthalten, handelt es sich um Mengen von bevorzugt 1 bis 900 Gewichtsteile, besonders bevorzugt 2 bis 100 Gewichtsteile, insbesondere, 2 bis 10 Gewichtsteile, jeweils bezogen auf 100 Gewichtsteile der Komponente (A).

Komponente (C) sind handelsübliche Produkte bzw. können nach in der Siliziumchemie gängigen Verfahren hergestellt werden.

Außer den Komponenten (A), (B) und gegebenenfalls (C) können die erfindungsgemäßen Zusammensetzungen alle weiteren Stoffe enthalten, wie sie auch bisher in Entschäumerformulierungen verwendet worden sind, wie z.B. wasserunlösliche organische Verbindungen (D).

Unter dem Begriff "wasserunlöslich" soll im Sinne der vorliegenden Erfindung eine Löslichkeit in Wasser bei 25°C und einem Druck von 1013,25 hPa von maximal 2 Gewichtsprozent verstanden werden.

Bei der gegebenenfalls eingesetzten Komponente (D) handelt es sich vorzugsweise um wasserunlösliche organische Verbindungen mit einem Siedepunkt größer als 100°C bei dem Druck der umgebenden Atmosphäre, also bei 900 bis 1100 hPa, insbesondere um solche, ausgewählt aus Mineralölen, nativen Ölen, Isoparaffinen, Polyisobutylenen, Rückständen aus der Oxoalkoholsynthese, Estern niedermolekularer synthetischer Carbonsäuren, Fettsäureestern, wie z.B. Octylstearat, Dodecylpalmitat, Fettalkoholen, Ethern niedermolekularer Alkohole, Phthalaten, Estern der Phosphorsäure und Wachsen.

Die erfindungsgemäßen Zusammensetzungen enthalten wasserunlösliche organische Verbindung (D) in Mengen von bevorzugt 0 bis 1000 Gewichtsteilen, besonders bevorzugt 0 bis 100 Gewichtsteilen, jeweils bezogen auf 100 Gewichtsteile des Gesamtgewichts der Komponenten (A), (B) und gegebenenfalls (C).

Bei den im erfindungsgemäßen Verfahren eingesetzten Komponenten kann es sich jeweils um eine Art einer solchen Komponente wie auch um ein Gemisch aus mindestens zwei Arten einer jeweiligen Komponente handeln.

Bevorzugt handelt es sich bei den erfindungsgemäßen Zusammensetzungen um solche, die
(A) 100 Gewichtsteile einer Organosiliziumverbindung enthaltend Einheiten der Formel (I),
(B) 0,1 bis 30 Gewichtsteile eines Zusatzstoffs ausgewählt aus
   (B1) Füllstoffpartikeln und
   (B2) Organopolysiloxanharz aus Einheiten der Formel (II), gegebenenfalls
(C) 1 bis 900 Gewichtsteile Organosiliziumverbindungen enthaltend Einheiten der Formel (III) und
   gegebenenfalls
(D) 0 bis 10000 Gewichtsteile wasserunlösliche organische Verbindung
enthalten.

Besonders bevorzugt handelt es sich bei den erfindungsgemäßen Zusammensetzungen um solche, die aus
(A) 100 Gewichtsteilen einer Organosiliziumverbindung aus Einheiten der Formel (I),
(B) 0,1 bis 30 Gewichtsteilen eines Zusatzstoffs ausgewählt aus
   (B1) Füllstoffpartikeln und
   (B2) Organopolysiloxanharz aus Einheiten der Formel (II), gegebenenfalls
(C) 1 bis 900 Gewichtsteilen Organosiliziumverbindungen aus Einheiten der Formel (III) und
   gegebenenfalls
(D) 0 bis 1000 Gewichtsteilen wasserunlösliche organische Verbindung
bestehen.

Die erfindungsgemäßen Zusammensetzungen sind bevorzugt viskose klare bis opake, farblose bis bräunliche Flüssigkeiten.

Die erfindungsgemäßen Zusammensetzungen haben vorzugsweise eine Viskosität von 10 bis 2 000 000 mPas insbesondere von 2 000 bis 50 000 mPas, jeweils bei 25°C.

Bei den erfindungsgemäßen Zusammensetzungen kann es sich um Lösungen, Dispersionen oder Pulver handeln.

Das Herstellen der erfindungsgemäßen Zusammensetzungen kann nach bekannten Verfahren, wie z.B. durch Mischen aller Komponenten erfolgen, wie z.B. unter Anwendung von hohen Scherkräften in Kolloidmühlen, Dissolvern oder Rotor-Stator-Homogenisatoren. Dabei kann der Mischvorgang bei reduziertem Druck erfolgen, um das Einmischen von Luft, welche z.B. in hochdispersen Füllstoffen enthalten ist, zu verhindern. Im Anschluss kann bei Bedarf die in situ Hydrophobierung der Füllstoffe erfolgen.

Falls es sich bei den erfindungsgemäßen Zusammensetzungen um Emulsionen handelt, können alle Emulgatoren eingesetzt werden, die dem Fachmann zur Herstellung von Siliconemulsionen bekannt sind, wie z.B. anionische, kationische oder nichtionogene Emulgatoren. Bevorzugt werden Emulgatormischungen eingesetzt, wobei mindestens ein nichtionogener Emulgator, wie beispielsweise Sorbitanfettsäureestern, ethoxylierten Sorbitanfettsäureestern, ethoxylierten Fettsäuren, ethoxylierten linearen oder verzweigten Alkoholen mit 10 bis 20 Kohlenstoffatomen und/oder Glycerinestern, enthalten sein sollte. Weiterhin können als Verdicker bekannte Verbindungen, wie Polyacrylsäure, Polyacrylate, Celluloseether wie Carboxymethylcellulose und Hydroxyethylcellulose, natürliche Gume wie Xanthan Gum und Polyurethane sowie Konservierungsmittel und andere übliche und dem Fachmann bekannte Zusätze zugesetzt werden.

Die kontinunierliche Phase der erfindungsgemäßen Emulsionen ist vorzugsweise Wasser. Es können jedoch auch erfindungsgemäße Zusammensetzungen in Form von Emulsionen hergestellt werden, bei denen die kontinuierliche Phase durch die Komponenten (A), (B) und gegebenenfalls (C) gebildet oder durch Komponente (D) gebildet wird. Es kann sich dabei auch um multiple Emulsionen handeln.

Verfahren zur Herstellung von Siliconemulsionen sind bekannt. Üblicherweise erfolgt die Herstellung durch einfaches Verrühren aller Bestandteile und gegebenenfalls anschließendes Homogenisieren mit Strahldispergatoren, Rotor-Stator-Homogenisatoren, Kolloidmühlen oder Hochdruckhomogenisatoren.

Falls es sich bei der erfindungsgemäßen Zusammensetzung um Emulsionen handelt, sind Öl in Wasser Emulsionen enthaltend 5 bis 50 Gew.-% Komponenten (A) bis (D), 1 bis 20 Gew.-% Emulgatoren und Verdicker und 30 bis 94 Gew.-% Wasser bevorzugt.

Die erfindungsgemäßen Zusammensetzungen können auch als frei fließende Pulver formuliert werden. Diese sind z.B. bei der Anwendung in pulverförmigen Waschmitteln bevorzugt. Die Herstellung dieser Pulver ausgehend von der Mischung der Komponenten (A), (B), gegebenenfalls (C) und gegebenenfalls (D) erfolgt nach dem Fachmann bekannten Verfahren, wie Sprühtrocknung oder Aufbaugranulation und dem Fachmann bekannten Zusätzen.

Die erfindungsgemäßen Pulver enthalten bevorzugt 2 bis 20 Gewichts-% Komponenten (A) bis (D). Als Träger kommen z.B. Zeolithe, Natriumsulfat, Cellulosederivate, Harnstoff und Zucker zum Einsatz. Weitere Bestandteile der erfindungsgemäßen Pulver können z.B. Wachse sein oder organischen Polymere, wie sie z.B. in EP-A 887097 und EP-A 1060778 beschrieben sind.

Ein weiterer Gegenstand der vorliegenden Erfindung sind Wasch- und Reinigungsmittel, enthaltend die erfindungsgemäßen Zusammensetzungen.

Die erfindungsgemäßen Zusammensetzungen können überall eingesetzt werden, wo Zusammensetzungen auf der Basis von Organosiliziumverbindungen auch bisher eingesetzt wurden. Insbesondere können sie als Entschäumer eingesetzt werden.

Ein weiterer Gegenstand der vorliegenden Erfindung ist ein Verfahren zum Entschäumen und/oder Schaumverhinderung von Medien, dadurch gekennzeichnet, dass die erfindungsgemäße Zusammensetzung dem Medium zugegeben wird.

Der Zusatz der erfindungsgemäßen Zusammensetzung zu den schäumenden Medien kann direkt erfolgen, mit geeigneten Lösungsmitteln, wie z.B. Toluol, Xylol, Methylethylketon oder t-Butanol, verdünnt, als Pulver oder als Emulsion. Die zur Erzielung der gewünschten Entschäumerwirkung notwendige Menge ist variabel und richtet sich z.B. nach der Art des Mediums, der Temperatur und der auftretenden Turbulenz.

Bevorzugt werden die erfindungsgemäßen Zusammensetzungen in Mengen von 0,1 Gew.-ppm bis 1 Gew.-%, insbesondere in Mengen von 1 bis 100 Gew.-ppm, zum schäumenden Medium zugegeben.

Das erfindungsgemäße Verfahren wird bei Temperaturen von bevorzugt -10 bis +150°C, besonders bevorzugt 5 bis 100°C, und dem Druck der umgebenden Atmosphäre, also etwa 900 bis 1100 hPa, durchgeführt. Das erfindungsgemäße Verfahren kann auch bei höheren oder niedrigeren Drücken durchgeführt werden, wie etwa bei 3000 bis 4000 hPa oder 1 bis 10 hPa.

Die erfindungsgemäßen Entschäumerzusammensetzungen können überall dort eingesetzt bzw. das erfindungsgemäße Verfahren dort durchgeführt werden, wo störender Schaum verhindert oder zerstört werden soll. Das ist z.B. in nichtwässrigen Medien wie bei der Teerdestillation oder der Erdölverarbeitung der Fall sowie in wässrigen Medien. Insbesondere geeignet sind die erfindungsgemäßen Entschäumerzusammensetzungen bzw. das erfindungsgemäße Verfahren zur Bekämpfung von Schaum in wässrigen Medien, wie z.B. in wässrigen Tensidsystemen, wie die Anwendung in Wasch- und Reinigungsmitteln, die Bekämpfung von Schaum in Abwasseranlagen, bei Textilfärbeverfahren, bei der Erdgaswäsche, in Polymerdispersionen, oder zum Entschäumen von bei der Zellstoffherstellung anfallenden wässrigen Medien.

Die erfindungsgemäßen Zusammensetzungen haben den Vorteil, dass sie als Entschäumer leicht handhabbar sind, und dass sie sich durch eine hohe, lang anhaltende Wirksamkeit in unterschiedlichsten Medien bei geringen Zusatzmengen auszeichnen. Das ist sowohl ökonomisch als auch ökologisch außerordentlich vorteilhaft.

Das erfindungsgemäße Verfahren hat den Vorteil, dass es einfach in der Durchführung und sehr wirtschaftliche ist.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25°C beziehen.

Im Folgenden werden die Strukturen der eingesetzten Phenylsiloxane mit ²⁹Si-NMR Angaben in mol% ermittelt.

Im Folgenden werden die Abkürzungen Me gleich Methylrest und Ph gleich Phenylrest verwendet.

### Prüfungen der Entschäumerwirksamkeit

### 1. Antischaumkennzahl AKZ

In einer Vorrichtung entsprechend DE-A 25 51 260 werden 200 ml einer 4 Gew.-%igen wässrigen Lösung eines Natriumalkylsulfonates (Mersolat), die 10 mg des zu untersuchenden Entschäumers (gelöst in der 10-fachen Menge an Methyl-Ethyl-Keton) enthält, 1 Minute mit zwei gegenläufigen Rührern aufgeschäumt. Anschließend wir der Schaumzerfall aufgezeichnet. Aus der Fläche der Auftragung Schaumhöhe gegen die Zeit wird die Antischaumkennzahl berechnet. Je niedriger diese Zahl ist, desto wirksamer ist der Entschäumer.

### 2. Rührtest

300 ml einer Lösung, die 1 Gew.-% eines entschäumerfreien Waschpulvers enthält, wurde 5 Minuten mit einem Rührer bei einer Geschwindigkeit von 1000 Umdrehungen/min aufgeschäumt. Anschließend wurden 100 µl einer 10 Gew.-%igen Lösung des Entschäumers in Methylethylketon zugegeben und das Rühren weitere 25 Minuten fortgesetzt. Während der gesamten Zeit wird die Schaumhöhe aufgezeichnet.

Als Maß für die Wirksamkeit wird die durchschnittliche Schaumhöhe bezogen auf die Schaumhöhe ohne Entschäumer nach 2-3 Minuten berechnet. Je niedriger dieser Wert ist, desto wirksamer ist der Entschäumer.

### 3. Test in der Waschmaschine mit pulverförmigen Waschmitteln

Zu 100 g des entschäumerfreien Waschpulvers wurden 0,1 g Entschäumer gegeben. Das Waschpulver wurde dann gemeinsam mit 3500 g sauberer Baumwollwäsche in eine Trommelwaschmaschine (Typ Miele Novotronik W918 ohne Fuzzy Logic) gegeben. Anschließend wird das Waschprogramm (bei 30°C) gestartet und die Schaumhöhe über einen Zeitraum von 55 Minuten aufgezeichnet. Aus den über den Gesamtzeitraum ermittelten Schaumnoten (0 kein Schaum messbar bis 6 Überschäumen) wird die durchschnittliche Schaumnote bestimmt. Je niedriger diese ist, desto wirksamer ist der Entschäumer über den gesamten Zeitraum.

### 4. Test in der Waschmaschine mit einem Flüssigwaschmittel

Zu 180 g eines entschäumerfreien Flüssigwaschmittels wurden 0,03 g Entschäumer gegeben. Das Waschmittel wurde dann gemeinsam mit 3500 g sauberer Baumwollwäsche in eine Trommelwaschmaschine (Typ Miele Novotronik W918 ohne Fuzzy Logic) gegeben. Anschließend wird das Waschprogramm (bei 40°C) gestartet und die Schaumhöhe über einen Zeitraum von 55 Minuten aufgezeichnet. Aus den über den Gesamtzeitraum ermittelten Schaumnoten (0 kein Schaum messbar bis 6 Überschäumen) wird die durchschnittliche Schaumnote bestimmt. Je niedriger diese ist, desto wirksamer ist der Entschäumer über den gesamten Zeitraum.

### Vergleichsbeispiel 1 (V 1)

Eine Entschäumergrundlage wird durch Vermischen von 2,5 Teilen eines Kondensationsproduktes mit einer Viskosität von 180 mPas hergestellt aus Octyldodecanol und einem mit Silanolgruppen terminierten Polydimethylsiloxan mit einer Viskosität von 40 mPas und 5 Teilen einer 50%igen toluolischen Lösung eines Siliconharzes aus 40 mol% Trimethylsiloxygruppen und 60 mol% SiO_{4/2}-Gruppen und anschließendem Entfernen der flüchtigen Bestandteile hergestellt.

Eine Mischung aus 89,3 Gewichtsteilen eines Trimethylsiloxygruppen terminierten Polydimethylsiloxans mit einer Viskosität von 1000 mPas bei 25°C (erhältlich bei der Wacker-Chemie GmbH, Deutschland unter dem Namen "Siliconöl AK 5000"), 5 Gewichtsteilen der oben erwähnten Entschäumergrundlage, 5 Teilen hydrophiler pyrogener Kieselsäure mit einer BET-Oberfläche von 300 m²/g (erhältlich bei der Wacker-Chemie GmbH, Deutschland unter dem Namen HDK® T30) und 0,7 Gewichtsteilen einer methanolischen KOH werden 2 Stunden bei 150°C erhitzt. Es wurde ein Antischaummittel mit einer Viskosität von 25 600 mPas erhalten. Dieses Antischaummittel wurde hinsichtlich der Antischaumkennzahl AKZ, des Rührtests und des Tests in der Waschmaschine überprüft. Die Ergebnisse dieser Tests sind in Tabelle 1 zusammengefasst.

### Vergleichsbeispiel 2 (V 2)

Ein verzweigtes Polyorganosiloxan wird durch die Umsetzung von 378 g eines mit Trimethylsiloxygruppen terminierten Polydimethylsiloxans mit einer Viskosität von 1000 mPas bei 25°C (erhältlich bei der Wacker-Chemie GmbH, Deutschland unter dem Namen "Siliconöl AK 1000"), 180 g eines mit Silanolgruppen terminierten Polydimethylsiloxans mit einer Viskosität von 10000 mPas bei 25°C (erhältlich bei der Wacker-Chemie GmbH, Deutschland unter dem Namen "Polymer FD 10") und 18 g Ethylsilicat (erhältlich bei der Wacker-Chemie GmbH, Deutschland unter dem Namen "SILIKAT TES 40) in Gegenwart von 0,3 g KOH durch Erhitzen auf 140°C hergestellt. Anschließend werden 30 g einer hydrophilen pyrogenen Kieselsäure mit einer BET-Oberfläche von 200 m²/g (erhältlich bei der Wacker-Chemie GmbH, Deutschland unter dem Namen HDK® N20) und 30 g eines mit Silanolgruppen terminierten Polydimethylsiloxans mit einer Viskosität von 40 mPas zugegeben, und die Mischung wird weitere 4 Stunden auf 180°C erhitzt und bei 50 hPa von flüchtigen Bestandteilen befreit. Es wurde eine viskose farblose Entschäumerformulierung mit einer Viskosität von 68 640 mPas erhalten.

Dieses Antischaummittel wurde hinsichtlich der Antischaumkennzahl AKZ, des Rührtests und des Tests in der Waschmaschine überprüft. Die Ergebnisse dieser Tests sind in Tabelle 1 zusammengefasst.

### Vergleichsbeispiel 3 (V 3)

90 Teile eines mit trimethylsiloxygruppen terminierten Diorganopolysiloxans aus 20 mol% 2-Phenylpropenylmethysiloxan- und 80 mol% Dodecylmethylsiloxaneinheiten, das eine Viskosität von 1000 mPas aufwies (also nur indirekt gebunden aromatische Gruppen enthält), 5 Teile einer pyrogenen Kieselsäure mit einer BET-Oberfläche von 300 m²/g, 3 Teile eines Polydimethylsiloxans mit endständigen C₂₀-Alkoxygruppen, 2 Teile eines bei Raumtemperatur festen Siliconharzes bestehend aus folgenden Einheiten (nach ²⁹Si-NMR und IR-Analyse) : 40 mol-% CH₃SiO_{1/2}-, 50 mol-% SiO_{4/2}-, 8 mol-% C₂H₅OSiO_{3/2}- und 2 mol-% HOSiO_{3/2}-. Dieses Harz hatte eine gewichtsmittlere Molmasse von 7900g/mol (bezogen auf Polystyrolstandard), und 0,7 Teile einer 20 Gew. %igen methanolischen KOH wurden mit einem Dissolver vermischt und 4 Stunden auf 150°C erhitzt. Es wurde ein Entschäumer mit einer Viskosität von 8000 mPas.

Die so erhaltene Zusammensetzung wurde nun hinsichtlich der Antischaumkennzahl AKZ, des Rührtests und des Tests in der Waschmaschine überprüft. Die Ergebnisse dieser Tests sind in Tabelle 1 zusammengefasst.

### Beispiel 1

Phenylsiloxan 1 ist ein Siliconöl mit einer Viskosität von 500 mm²/s, das laut NMR aus folgenden Bausteinen besteht:

| | |
|---|---|
| Me₃SiO_{(1/2)} | 9,7% |
| Me₂SiO_{(2/2)} | 64,1% |
| Ph₂SiO_{(2/2)} | 19,6% |
| PhSiO_{(3/2)} | 6,6% |

90 Teile Phenylsiloxan 1, 5 Teile einer pyrogenen Kieselsäure mit einer BET-Oberfläche von 300 m²/g (käuflich erhältlich bei der Wacker-Chemie GmbH, Deutschland unter der Bezeichnung HDK® T30), 5 Teile eines bei Raumtemperatur festen Siliconharzes bestehend aus folgenden Einheiten (nach ²⁹Si-NMR und IR-Analyse): 40 mol-% CH₃SiO_{1/2}-, 50 mol-% SiO_{4/2}-, 8 mol-% C₂H₅OSiO_{3/2}- und 2 mol-% HOSiO_{3/2}-. Dieses Harz hatte eine gewichtsmittlere Molmasse von 7900g/mol (bezogen auf Polystyrolstandard), und 1,5 Teile einer 10 Gew.-%igen KOH dispergiert in Polydimethylsiloxan mit Trimethylsiloxy-Endgruppen und einer Viskosität von 1000 mPas werden mit einem Dissolver vermischt und 4 Stunden auf 150°C erhitzt. Es wurde ein Entschäumer mit einer Viskosität von 28800 mPas erhalten.

Die so erhaltene Zusammensetzung wurde nun hinsichtlich der Antischaumkennzahl AKZ, des Rührtests und des Tests in der Waschmaschine überprüft. Die Ergebnisse dieser Tests sind in Tabelle 1 zusammengefasst.

### Beispiel 2

Phenylsiloxan 2 ist ein Siliconöl mit einer Viskosität von 200 mm²/s, das laut NMR aus folgenden Bausteinen besteht:

| | |
|---|---|
| Me₃SiO_{(1/2)} | 10,2% |
| Me₂SiO_{(2/2)} | 62,2% |
| Ph₂Si(OH)O_{(1/2)} | 0,7% |
| PhSi(Me)O_{(2/2)} | 7,2% |
| Ph₂SiO_{(2/2)} | 13,8% |
| PhSi(OH)O_{(2/2)} | 1,1% |
| PhSiO_{(3/2)} | 4,8% |

90 Teile Phenylsiloxan 2, 5 Teile einer pyrogenen Kieselsäure mit einer BET-Oberfläche von 300 m²/g (käuflich erhältlich bei der Wacker-Chemie GmbH, Deutschland unter der Bezeichnung HDK® T30), 5 Teile des in Beispiel 1 beschriebenen festen Siliconharzes und 1,5 Teile einer 10 Gew.-%igen KOH dispergiert in Polydimethylsiloxan mit Trimethylsiloxy-Endgruppen und einer Viskosität von 1000 mPas werden mit einem Dissolver vermischt und 4 Stunden auf 150°C erhitzt. Es wurde ein Entschäumer mit einer Viskosität von 15200 mPas erhalten.

Die so erhaltene Zusammensetzung wurde nun hinsichtlich der Antischaumkennzahl AKZ, des Rührtests und des Tests in der Waschmaschine überprüft. Die Ergebnisse dieser Tests sind in Tabelle 1 zusammengefasst.

### Beispiel 3

Phenylsiloxan 3 ist ein Siliconöl mit einer Viskosität von 1250 mm²/s, das laut NMR aus folgenden Bausteinen besteht:

| | |
|---|---|
| Me₃SiO_{(1/2)} | 2,9% |
| Me₂SiO_{(2/2)} | 34,7% |
| Me₂Si(OH)O_{(1/2)} | 0,4% |
| PhSi(Me)O_{(2/2)} | 61,0% |
| PhSiO_{(3/2)} | 1,0% |

87 Teile Phenylsiloxan 3, 5 Teile einer pyrogenen Kieselsäure mit einer BET-Oberfläche von 400 m²/g (käuflich erhältlich bei der Wacker-Chemie GmbH, Deutschland unter der Bezeichnung HDK® T40), 3 Teile eines Polydimethylsiloxans mit endständigen C₂₀-Alkoxygruppen und einer Viskosität von 100 mPas, 5 Teile des in Beispiel 1 beschriebenen festen Siliconharzes und 0,7 Teile einer 20 Gew.-%igen methanolischen KOH werden mit einem Dissolver vermischt und 4 Stunden auf 150°C erhitzt. Es wurde ein Entschäumer mit einer Viskosität von 6400 mPas erhalten.

Die so erhaltene Zusammensetzung wurde nun hinsichtlich der Antischaumkennzahl AKZ, des Rührtests und des Tests in der Waschmaschine überprüft. Die Ergebnisse dieser Tests sind in Tabelle 1 zusammengefasst.

### Beispiel 4

Phenylsiloxan 4 ist ein Siliconöl mit einer Viskosität von 1000 mm²/s, das laut NMR aus folgenden Bausteinen besteht:

| | |
|---|---|
| Me₃SiO_{(1/2)} | 8,8% |
| Me₂SiO_{(2/2)} | 65,3% |
| Me₂Si(OH)O_{(1/2)} | 0,5% |
| MeSiO_{(3/2)} | 1,5% |
| PhSiO_{(3/2)} | 23,9% |

88 Teile Phenylsiloxan 4, 2 Teile einer pyrogenen Kieselsäure mit einer BET-Oberfläche von 200 m²/g (käuflich erhältlich bei der Wacker-Chemie GmbH, Deutschland unter der Bezeichnung HDK® N20), 3,6 Teile eines Polydimethylsiloxans mit endständigen C₂₀-Alkoxygruppen und einer Viskosität von 100 mPas und 2,4 Teile des in Beispiel 1 beschriebenen festen Siliconharzes und 0,7 Teile einer 20 Gew.-%igen methanolischen KOH werden mit einem Dissolver vermischt und 4 Stunden auf 150°C erhitzt. Anschließend werden 4 Teile einer vorbehandelten, mit Polydimethylsiloxan hydrophobierten gefällten Kieselsäure mit einer BET-Oberfläche von 90 g/m² (käuflich erhältlich bei Degussa AG, Deutschland unter der Bezeichnung SIPERNAT® D10) mit dem Dissolver eindispergiert. Es wurde ein Entschäumer mit einer Viskosität von 4000 mPas erhalten.

Die so erhaltene Zusammensetzung wurde nun hinsichtlich der Antischaumkennzahl AKZ, des Rührtests und des Tests in der Waschmaschine überprüft. Die Ergebnisse dieser Tests sind in Tabelle 1 zusammengefasst.

### Beispiel 5

Phenylsiloxan 5 ist ein Siliconöl mit einer Viskosität von 1000 mm²/s das laut NMR aus folgenden Bausteinen besteht:

| | |
|---|---|
| Me₃SiO_{(1/2)} | 7,6% |
| Me₂SiO_{(2/2)} | 62,4% |
| Ph₂SiO_{(2/2)} | 22,9% |
| PhSi(OH)O_{(2/2)} | 0,3% |
| PhSiO_{(3/2)} | 6,8% |

90 Teile Phenylsiloxan 5, 2 Teile einer gefällten Kieselsäure mit einer BET-Oberfläche von 170 m²/g (käuflich erhältlich bei der Degussa AG, Deutschland unter der Bezeichnung Sipernat 383 DS) und 3 Teile einer pyrogenen Kieselsäure mit einer BET-Oberfläche von 300 m²/g (käuflich erhältlich bei der Wacker-Chemie GmbH, Deutschland unter der Bezeichnung HDK® T30), 3 Teile eines Polydimethylsiloxans mit endständigen C₂₀-Alkoxygruppen und einer Viskosität von 100 mPas und 2 Teile des in Beispiel 1 beschriebenen festen Siliconharzes und 0,7 Teile einer 20 Gew.-%igen methanolischen KOH werden mit einem Dissolver vermischt und 4 Stunden auf 150°C erhitzt. Es wurde ein Entschäumer mit einer Viskosität von 62000 mPas erhalten.

Die so erhaltene Zusammensetzung wurde nun hinsichtlich der Antischaumkennzahl AKZ, des Rührtests und des Tests in der Waschmaschine überprüft. Die Ergebnisse dieser Tests sind in Tabelle 1 zusammengefasst.

### Beispiel 6

90 Teile Phenylsiloxan 3, dessen Struktur in Beispiel 3 beschrieben ist, 2 Teile einer vorbehandelten hydrophobierten pyrogenen Kieselsäure mit einer BET-Oberfläche von 140 m²/g (käuflich erhältlich bei der Wacker-Chemie GmbH, Deutschland unter der Bezeichnung HDK® H2000), 8 Teile des in Beispiel 1 beschriebenen festen Siliconharzes und 1,5 Teile einer 10 Gew.-%igen KOH dispergiert in Polydimethylsiloxan mit einer Viskosität von 1000 mPas werden mit einem Dissolver vermischt und 4 Stunden auf 150°C erhitzt. Es wurde ein Entschäumer mit einer Viskosität von 3200 mPas erhalten.

Die so erhaltene Zusammensetzung wurde nun hinsichtlich der Antischaumkennzahl AKZ, des Rührtests und des Tests in der Waschmaschine überprüft. Die Ergebnisse dieser Tests sind in Tabelle 1 zusammengefasst.

### Beispiel 7

90 Teile Phenylsiloxan 3, dessen Struktur in Beispiel 3 beschrieben ist, 8 Teile einer vorbehandelten hydrophobierten pyrogenen Kieselsäure mit einer BET-Oberfläche von 140 m²/g (käuflich erhältlich bei Wacker-Chemie GmbH, Deutschland unter der Bezeichnung unter der Bezeichnung HDK® H2000), 2 Teile des in Beispiel 1 beschriebenen festen Siliconharzes und 1,5 Teile einer 10 Gew.-%igen KOH dispergiert in Polydimethylsiloxan mit Trimethylsiloxy-Endgruppen und einer Viskosität von 1000 mPas werden mit einem Dissolver vermischt und 4 Stunden auf 150°C erhitzt. Es wurde ein Entschäumer mit einer Viskosität von 25600 mPas erhalten.

Die so erhaltene Zusammensetzung wurde nun hinsichtlich der Antischaumkennzahl AKZ, des Rührtests und des Tests in der Waschmaschine überprüft. Die Ergebnisse dieser Tests sind in Tabelle 1 zusammengefasst.

**Tabelle 1**

| Beispiel | Antischaumkennzahl AKZ | Rührtest durchschnittliche Schaumhöhe in % | Waschmaschinentest Durchschnittliche Schaumnote |
|---|---|---|---|
| V 1 | 682 | 58 | 3,3¹⁾ 4,9²⁾ |
| V 2 | 1612 | 75 | 4,4¹⁾ |
| V 3 | 2137 | 91 | 3,2¹⁾ |
| Beispiel 1 | 82 | 41 | 1,9¹⁾ |
| Beispiel 2 | 152 | 52 | 2,7¹⁾ |
| Beispiel 3 | 122 | 50 | 1,0¹⁾ 0,7²⁾ |
| Beispiel 4 | 135 | 45 | 3,0¹⁾ |
| Beispiel 5 | 62 | 21 | 0,4¹⁾ |
| Beispiel 6 | 212 | 43 | 0,7¹⁾ |
| Beispiel 7 | 337 | 55 | 2,9¹⁾ |

| | | | |
|---|---|---|---|
| ¹⁾ mit pulverförmigen Waschmittel ²⁾ mit Flüssigwaschmittel | | | |

### Beispiel 8

### Prüfung in Schwarzlauge:

Diese Prüfung wurde mit Emulsionen auf Basis der in den Beispielen 1 bis 7 und Vergleichsbeispielen 1 bis 3 beschriebenen Entschäumer durchgeführt. Diese Emulsionen enthalten jeweils 20 Gew.-% Siliconentschäumer, 10 Gew.-% einer Mischung aus Sojaöl, einem ethoxylierten Isotridecylalkohol (HLB-Wert von 11,2), einem ethoxylierten Stearylalkohl (HLB 9,7), Pentaerytrithdistearat und einem Polyethersiloxan als Emulgator sowie 0,3 Gew.-% Formaldehyd als Konservierungsmittel.

400 ml Schwarzlauge (Hardwood aus der Verarbeitung von Birken) wurden in einem 1-1-Messzylinder mit Waschflaschenaufsatz 15 Minuten mit einem Thermostat auf 80°C temperiert. Nach Zugabe von 20 µl der jeweiligen Entschäumeremulsion wurde die Schwarzlauge mit einer Geschwindigkeit von 2,3 l/min umgepumpt. Es wurde die Zeit t zwischen dem Beginn des Testes und dem Zeitpunkt, wenn der Schaum auf 75 mm gestiegen war, gemessen.

Je länger dieser Zeitraum t ist, desto wirksamer ist der Entschäumer.

**Tabelle 2**

| Beispiel | Schwarzlaugentest Zeitraum t in s |
|---|---|
| V 1 | 110 |
| V 2 | 80 |
| V 3 | 95 |
| Beispiel 1 | 165 |
| Beispiel 2 | 130 |
| Beispiel 3 | 195 |
| Beispiel 4 | 135 |
| Beispiel 5 | 205 |
| Beispiel 6 | 180 |
| Beispiel 7 | 170 |

### Beispiel 9

90 Teile Phenylsiloxan 3, dessen Herstellung in Beispiel 3 beschrieben ist, 5 Teile einer pyrogene Kieselsäure mit einer BET-Oberfläche von 400 m²/g, (erhältlich bei der Wacker-Chemie GmbH unter der Bezeichnung HDK® T40) und 5 Teile eines bei Raumtemperatur festen Siliconharzes bestehend aus folgenden Einheiten (nach ²⁹Si-NMR und IR-Analyse) : 40 mol-% CH₃SiO_{1/2}-, 50 mol-% SiO_{4/2}-, 8 mol-% C₂H₅OSiO_{3/2}- und 2 mol-% HOSiO_{3/2}- mit einer gewichtsmittleren Molmasse von 7900 g/mol werden in Gegenwart von 1500 ppm KOH 4 Stunden auf 150°C erhitzt.

Es werden 100 Teile einer Entschäumerformulierung erhalten. Die werden bei 60°C mit 30 Teilen Sobitanmonstearat (erhältlich unter der Bezeichnung "Span 60" bei Uniqema) und 20 Teile Polyoxyethylen(20)sorbitanmonostearat (erhältlich unter der Bezeichnung "Tween 60" bei Uniqema) vermischt und schrittweise mit 500 Teilen Wasser verdünnt. Zu dieser Mischung werden 2 Teile einer Polyacrylsäure (erhältlich unter der Bezeichnung "Carbopol 934" bei BF Goodrich) gegeben, vermischt und weitere 345 Teile Wasser und 3 Teile eines Konservierungsmittels auf Isothiazolinonbasis (erhältlich unter der Bezeichnung "Acticide MV" bei der Thor-Chemie Speyer, Deutschland) zugegeben. Anschließend wird die Emulsion bei 100 bar mit einem Hochdruckhomogenisator homogenisiert und mit 10 %iger NaOH auf einen pH-Wert von 6-7 eingestellt.

Die erhaltene Entschäumeremulsion war hervorragend geeignet, um wässrige Polymerdispersionen zu entschäumen.

### Beispiel 10

90 Teile Phenylsiloxan 3, dessen Herstellung in Beispiel 3 beschrieben ist, 5 Teile einer pyrogene Kieselsäure mit einer BET-Oberfläche von 400 m²/g, (erhältlich bei der Wacker-Chemie GmbH unter der Bezeichnung HDK® T40) und 5 Teile eines bei Raumtemperatur festen Siliconharzes bestehend aus folgenden Einheiten (nach ²⁹Si-NMR und IR-Analyse) : 40 mol-% CH₃SiO_{1/2}-, 50 mol-% SiO_{4/2}-, 8 mol-% C₂H₅OSiO_{3/2}- und 2 mol-% HOSiO_{3/2}- mit einer gewichtsmittleren Molmasse von 7900 g/mol werden in Gegenwart von 1500 ppm KOH 4 Stunden auf 150°C erhitzt.

35 ml einer 2 %igen Lösung eines hochmolekularen Copolymers aus Acrylsäure, Methacrylsäurestearat und Pentaerythritoldiallylether (im molaren Verhältnis von 100:2:0,3) (die, wenn sie neutralsiert wird, eine Viskosität von 17 500 mm²/s aufweist) wurden in einem Becherglas vorgelegt, und unter intensivem Mischen mit einem Flügelrührer wurden 10 g der o.g. Entschäumerformulierung langsam zugegeben, so dass nach 10 Minuten Rühren eine Emulsion der Entschäumerformulierung in der Polymerlösung vorlag. Unter fortgesetztem Rühren wurden zu dieser Emulsion 88,5 g leichte Soda gegeben und anschließend das Wasser unter fortgesetztem Mischen unter Vakuum entfernt. Danach wurden 0,5 g einer hydrophilen Kieselsäure mit einer BET-Oberfläche von 200 m²/g (erhältlich bei der Wacker-Chemie GmbH unter der Bezeichnung HDK® N20) zugemischt.

Es wurde ein weißes, rieselfähiges Pulver erhalten. Dieses wurde mit Erfolg zur Schaumverhinderung in pulverförmigen Waschmitteln oder in pulverförmigen Pflanzenschutzkonzentraten eingesetzt.

## Patentansprüche

1. Zusammensetzungen enthaltend
(A) mindestens eine Organosiliziumverbindung, welche Einheiten der Formel
Rₐ(R¹O)_{b}R²_{c}SiO_{(4-a-b-c)/2} (I)
aufweist, worin
R gleich oder verschieden sein kann und Wasserstoffatom, einen einwertigen, SiC-gebundenen, gegebenenfalls substituierten, aliphatischen oder über aliphatische Gruppen an das Siliziumatom gebundener aromatischer Kohlenwasserstoffrest bedeutet,
R¹ gleich oder verschieden sein kann und Wasserstoffatom oder einen einwertigen, gegebenenfalls substituierten Kohlenwasserstoffrest bedeutet,
R² gleich oder verschieden sein kann und einen einwertigen, gegebenenfalls substituierten, aromatischen Kohlenwasserstoffrest, der über ein Ringkohlenstoffatom an das Siliziumatom angebunden ist, bedeutet,
a 0, 1, 2 oder 3 ist,
b 0, 1, 2 oder 3 ist und
c 0, 1, 2 oder 3 ist,
mit der Maßgabe, dass die Summe a+b+c kleiner oder gleich 3 ist und pro Molekül in 1-100 % aller Einheiten der Formel (I) c verschieden 0 ist, in mindestens 50 % aller Einheiten der Formel (I) in der Organosiliziumverbindung die Summe a+b+c gleich 2 ist und es sich bei 15 bis 100% der SiC-gebundenen Reste in der Komponente (A) um Reste R2 handelt,
(B) mindestens einen Zusatzstoff
(B1) Füllstoffpartikeln und
(B2) Organopolysiloxanharz aus Einheiten der Formel
R³_{d}(R⁴O)ₑSiO_{(4-d-e)/2} (II),
worin
R³ gleich oder verschieden sein kann und Wasserstoffatom oder einen einwertigen, gegebenenfalls substituierten, SiC-gebundenen Kohlenwasserstoffrest bedeutet,
R⁴ gleich oder verschieden sein kann und Wasserstoffatom oder einen einwertigen, gegebenenfalls substituierten Kohlenwasserstoffrest bedeutet,
d 0, 1, 2 oder 3 ist und
e 0, 1, 2 oder 3 ist,
mit der Maßgabe, dass die Summe d+e≤3 ist und in weniger als 5 % aller Einheiten der Formel (II) im Organopolysiloxanharz die Summe d+e gleich 2 ist sowie die Organopolysiloxanharze im Wesentlichen aus R³₃SiO_{1/2} (M) - und SiO_{4/2} (Q) -Einheiten bestehen mit einem molaren Verhältnis von M- zu Q-Einheiten im Bereich von 0,5 bis 2,0,
und gegebenenfalls
(C) eine Organosiliziumverbindung, welche Einheiten der Formel
R5_{g}(R⁶O)ₕSiO_{(4-g-h)/2} (III)
aufweist, worin
R⁵ gleich oder verschieden sein kann und eine für R angegebene Bedeutung hat,
R⁶ gleich oder verschieden sein kann und eine für R¹ angegebene Bedeutung hat,
g 0, 1, 2 oder 3 ist und
h 0, 1, 2 oder 3 ist,
mit der Maßgabe, dass die Summe g+h≤3 ist und in mindestens 50 % aller Einheiten der Formel (IV) in der Organosiliziumverbindung die Summe g+h gleich 2 ist.

2. Zusammensetzungen gemäß Anspruch 1, **dadurch gekennzeichnet, dass** es sich bei R² um den Phenylrest handelt.

3. Zusammensetzungen gemäß Anspruch 1 oder 2, **dadurch gekennzeichnet, dass** die Organosiliziumverbindungen (A) eine Viskosität von 10 bis 1 000 000 mPas bei 25°C haben.

4. Zusammensetzungen gemäß einem oder mehreren der Ansprüche 1 bis 3, **dadurch gekennzeichnet, dass** R gleich Methylrest ist.

5. Zusammensetzungen gemäß einem oder mehreren der Ansprüche 1 bis 4, **dadurch gekennzeichnet, dass** es sich bei der Komponente (B1) um pulverförmige Füllstoffe handelt.

6. Zusammensetzungen gemäß einem oder mehreren der Ansprüche 1 bis 5, **dadurch gekennzeichnet, dass** es sich bei den Zusammensetzungen um solche handelt, die
(A) 100 Gewichtsteile einer Organosiliziumverbindung enthaltend Einheiten der Formel (I),
(B) 0,1 bis 30 Gewichtsteile eines Zusatzstoffs ausgewählt aus
(B1) Füllstoffpartikeln und
(B2) Organopolysiloxanharz aus Einheiten der Formel (II), gegebenenfalls
(C) 1 bis 900 Gewichtsteile Organosiliziumverbindungen enthaltend Einheiten der Formel (III) und
gegebenenfalls
(D) 0 bis 10000 Gewichtsteile wasserunlösliche organische Verbindung
enthalten.

7. Wasch- und Reinigungsmittel, enthaltend die Zusammensetzungen gemäß einem oder mehreren der Ansprüche 1 bis 6.

8. Verfahren zum Entschäumen und/oder zur Schaumverhinderung von Medien, **dadurch gekennzeichnet, dass** die Zusammensetzung gemäß einem oder mehreren der Ansprüche 1 bis 6 dem Medium zugegeben wird.

9. Verfahren nach Anspruch 8, **dadurch gekennzeichnet, dass** die Zusammensetzung in Mengen von 0,1 Gew.-ppm bis 1 Gew.-% zum schäumenden Medium zugegeben wird.

## Claims

1. Compositions comprising
(A) at least one organosilicon compound which has units of the formula
Rₐ(R¹O)_{b}R²_{c}SiO_{(4-a-b-c)/2} (I)
in which
R can be identical or different and denotes hydrogen atom, a monovalent, SiC-bonded, optionally substituted, aliphatic hydrocarbon radical or an aromatic hydrocarbon radical attached to the silicon atom via aliphatic groups,
R¹ can be identical or different and denotes hydrogen atom or a monovalent, optionally substituted hydrocarbon radical,
R² can be identical or different and denotes a monovalent, optionally substituted, aromatic hydrocarbon radical which is attached to the silicon atom via a carbon ring atom,
a is 0, 1, 2 or 3,
b is 0, 1, 2 or 3 and
c is 0, 1, 2 or 3
with the proviso that the sum a+b+c is less than or equal to 3, and in 1-100% of all units of the formula (I) per molecule, c is other than 0, in at least 50% of all of the units of the formula (I) in the organosilicon compound the sum a+b+c is 2 and 15 to 100% of the SiC-bonded radicals in component (A) comprise radicals R2,
(B) at least one additive
(B1) filler particles and
(B2) organopolysiloxane resin made up of units of the formula
R³_{d}(R⁴O)ₑSiO_{(4-d-e)/2} (II)
in which
R³ can be identical or different and denotes hydrogen atom or a monovalent, optionally substituted, SiC-bonded hydrocarbon radical,
R⁴ can be identical or different and denotes hydrogen atom or a monovalent, optionally substituted hydrocarbon radical,
d is 0, 1, 2 or 3 and
e is 0, 1, 2 or 3,
with the proviso that the sum d+e≤3 and in less than 5% of all of the units of the formula (II) in the organopolysiloxane resin the sum d+e is 2 and also the organopolysiloxane resins consist essentially of R³₃SiO_{1/2} (M) and SiO_{4/2} (Q) units having a molar ratio of M to Q units in the range from 0.5 to 2.0,
and optionally
(C) an organosilicon compound which has units of the formula
R⁵_{g}(R⁶O)ₕSiO_{(4-g-h)/2} (III)
in which
R⁵ can be identical or different and has a meaning given for R,
R⁶ can be identical or different and has a meaning given for R¹,
g is 0, 1, 2 or 3 and
h is 0, 1, 2 or 3,
with the proviso that the sum g+h≤3 and in at least 50% of all of the units of the formula (IV) in the organosilicon compound the sum g+h is 2.

2. Compositions according to Claim 1, **characterized in that** R² comprises the phenyl radical.

3. Compositions according to Claim 1 or 2, **characterized in that** the organosilicon compounds (A) have a viscosity of 10 to 1 000 000 mPas at 25°C.

4. Compositions according to one or more of Claims 1 to 3, **characterized in that** R is the methyl radical.

5. Compositions according to one or more of Claims 1 to 4, **characterized in that** component (B1) comprises pulverulent fillers.

6. Compositions according to one or more of Claims 1 to 5, **characterized in that** the compositions are those which comprise
(A) 100 parts by weight of an organosilicon compound comprising units of the formula (I),
(B) 0.1 to 30 parts by weight of an additive selected from
(B1) filler particles and
(B2) organopolysiloxane resin made up of units of the formula (II),
optionally
(C) 1 to 900 parts by weight of organosilicon compounds containing units of the formula (III), and
optionally
(D) 0 to 10 000 parts by weight of water-insoluble organic compound.

7. Detergent comprising the compositions according to one or more of Claims 1 to 6.

8. Method of defoaming media and/or preventing foam therein, **characterized in that** the composition according to one or more of Claims 1 to 6 is added to the medium.

9. Method according to Claim 8, **characterized in that** the composition is added in amounts of 0.1 ppm by weight to 1% by weight to the foaming medium.

## Revendications

1. Compositions contenant
(A) au moins un composé organosilicié qui contient des unités de formule
Rₐ(R¹O)_{b}R²_{c}SiO_{(4-a-b-c)/2} (I)
dans laquelle
R peut être identique ou différent et signifie un atome d'hydrogène, un radical hydrocarboné monovalent, lié par SiC, le cas échéant substitué, aliphatique ou aromatique lié via des groupes aliphatiques à l'atome de silicium,
R¹ peut être identique ou différent et signifie un atome d'hydrogène ou un radical hydrocarboné monovalent, le cas échéant substitué,
R² peut être identique ou différent et signifie un radical hydrocarboné monovalent, le cas échéant substitué, aromatique, qui est lié via un atome de carbone de cycle à l'atome de silicium,
a représente 0, 1, 2 ou 3,
b représente 0, 1, 2 ou 3 et
c représente 0, 1, 2 ou 3,
à condition que la somme a + b + c soit inférieure ou égale à 3 et que, par molécule, dans 1-100% de toutes les unités de formule (I), c soit différent de 0, dans au moins 50% de toutes les unités de formule (I) dans le composé organosilicié, la somme a + b + c soit égale à 2 et qu'il s'agisse, pour 15 à 100% des radicaux liés par SiC dans le composant (A), de radicaux R²,
(B) au moins un additif,
(B1) des particules de charge et
(B2) une résine d'organopolysiloxane d'unités de formule
R³_{d}(R⁴O)ₑSiO_{(4-d-e)/2} (II),
dans laquelle
R³ peut être identique ou différent et signifie un atome d'hydrogène ou un radical hydrocarboné monovalent, lié par SiC, le cas échéant substitué,
R⁴ peut être identique ou différent et signifie un atome d'hydrogène ou un radical hydrocarboné monovalent, le cas échéant substitué,
d représente 0, 1, 2 ou 3 et
e représente 0, 1, 2 ou 3,
à condition que la somme d + e ≤ 3 et que dans moins de 5% de toutes les unités de formule (II) dans la résine d'organopolysiloxane, la somme d + e soit égale à 2 et que les résines d'organopolysiloxane soient essentiellement constituées par des unités R³₃SiO_{1/2} (M) et SiO_{4/2} (Q) avec un rapport molaire des unités M aux unités Q dans la plage de 0,5 à 2,0, et le cas échéant
(C) un composé organosilicié qui contient des unités de formule
R5_{g}(R6O)ₕSiO_{(4-g-h)/2} (III),
dans laquelle
R⁵ peut être identique ou différent et présente une signification indiquée pour R,
R⁶ peut être identique ou différent et présente une signification indiquée pour R¹,
g représente 0, 1, 2 ou 3 et
h représente 0, 1, 2 ou 3,
à condition que la somme g + h ≤ 3 et que dans au moins 50% de toutes les unités de formule (IV) dans le composé organosilicié, la somme g + h soit égale à 2.

2. Compositions selon la revendication 1, **caractérisées en ce qu'**il s'agit, pour R², du radical phényle.

3. Compositions selon la revendication 1 ou 2, **caractérisées en ce que** les composés organosiliciés (A) présentent une viscosité de 10 à 1.000.000 mPa.s à 25°C.

4. Compositions selon l'une ou plusieurs des revendications 1 à 3, **caractérisées en ce que** R représente un radical méthyle.

5. Compositions selon l'une ou plusieurs des revendications 1 à 4, **caractérisées en ce qu'**il s'agit pour le composant (B1) de charges poudreuses.

6. Compositions selon l'une ou plusieurs des revendications 1 à 5, **caractérisées en ce qu'**il s'agit pour les compositions de celles qui contiennent
(A) 100 parties en poids d'un composé organosilicié contenant des unités de formule (I),
(B) 0,1 à 30 parties en poids d'un additif choisi parmi
(B1) des particules de charge et
(B2) une résine d'organopolysiloxane d'unités de formule (II), le cas échéant
(C) 1 à 900 parties en poids de composés organosiliciés contenant des unités de formule (III) et le cas échéant
(D) 0 à 10.000 parties en poids d'un organique insoluble dans l'eau.

7. Agent de lavage et de nettoyage contenant les compositions selon l'une ou plusieurs des revendications 1 à 6.

8. Procédé pour enlever la mousse et/ou pour empêcher la mousse d'agents, **caractérisé en ce que** la composition selon l'une ou plusieurs des revendications 1 à 6 est ajoutée à l'agent.

9. Procédé selon la revendication 8, **caractérisé en ce que** la composition est ajoutée en des quantités de 0,1 ppm en poids à 1% en poids à l'agent moussant.
